# EUROPEAN PATENT APPLICATION

(11) **EP 3 173 948 A1**
(43) Date of publication of application: **31.05.2017**
(21) Application number: 16162359.0
(22) Date of filing: 24.03.2016
(51) Int. Cl.: G06F 17/30

(54) **METHOD AND APPARATUS FOR RECOMMENDATION OF REFERENCE DOCUMENTS**

(30) Priority: 27.11.2015 CN 201510849040
(71) Applicant: Xiaomi Inc., Beijing 100085 (CN)
(72) Inventor: CHEN, Zhijun, 100085 Haidian District (CN); ZHANG, Tao, 100085 Haidian District (CN); WANG, Pingze, 100085 Haidian District (CN)
(74) Representative: Reeve, Nicholas Edward

(57) **Abstract**

Method and device for recommendation of reference documents are provided in the disclosure. In the method, content information of a target document that is being operated by a user is obtained (101, 201, 301), the content information is parsed (102, 202, 302) according to a preset parsing rule, key information obtained by the parsing is screened (103, 203, 303) to extract search words from the key information, search is performed (104, 204, 304) based on the search words to obtain reference documents including the search words and the reference documents are displayed (105, 206, 307). Real-time search service on key words can be achieved following the user's drafting document to provide reference documents with high matching degree and high accuracy to satisfy the user's requirements and improve the user's experience.

## Description

### FIELD

The present disclosure generally relates to information search techniques, and more particularly to method and apparatus for making a recommendation of reference documents.

### BACKGROUND

With the rapid development of society and the continuous improvement of science and technology, information available to people presents an exponential growth. People increasingly need to find useful information from among a massive amount of available information using information searching techniques.

Currently, a user often need search for reference documents before writing an article such as a paper, a report and the like with office software, such as Microsoft^{®} Word. A search is generally performed by setting several key words based on the main idea of the article, performing a search on the key words with a search engine, such as, Baidu Search, Google Search and the like, and then looking up in the searched information for any useful information. The effect of the search greatly relies on the user's skill at searching, e.g. proper selection of the key words, the ability to rapidly locate valuable information among the searched massive information, and so on.

### SUMMARY OF THE INVENTION

In view of the related arts, a method and apparatus for recommendation of reference documents are provided in the disclosure and technical solutions are as follows.

According to a first aspect of the present disclosure, a method for recommendation of reference documents is provided, including: obtaining content information of a target document being operated by a user; parsing the content information according to a preset parsing rule; screening key information obtained by the parsing to extract search words from the key information; performing a search based on the search words to obtain reference documents including the search words; and displaying the reference documents.

Alternatively, the preset parsing rule may include a flag content extraction rule and a segmenting rule, and the parsing the content information according to the preset parsing rule may include: extracting flag content in the content information according to the flag content extraction rule, wherein the flag content may include at least one of a title of the target document and a key word specified in the target document; and segmenting the content information to which the extraction of the flag content has been performed according to the segmenting rule to obtain respective segmented word-segments.

Alternatively, the key information may include the flag content and the word-segments, and the screening key information obtained by the parsing to extract search words from the key information may include: deleting unrelated words from the respective word-segments, wherein the unrelated words comprise one or more of conjunction, single-character word and pronoun; sorting the respective word-segments remained after the deleting by appearances; and a number of the word-segments is selected in a descending order of the appearances, the number satisfying a preset threshold, and those identical to the flag content are removed from the selected word-segments to obtain screened word-segments, the screened word-segments and the flag content forming the search words.

Alternatively, performing a search based on the search words to obtain reference documents including the search words may include: importing the search words into a search base for search to obtain the reference documents including the search words, wherein the search base may include one or more of local storage medium, cloud storage device preset by a user, and public search engine resource.

Alternatively, the method may further include: after performing a search based on the search words, evaluating the documents obtained through the search based on a preset evaluation rule which comprises one or more of factor of cited times, rate of positive opinions, and quality level of document; wherein the obtaining the reference documents including the search words may include: sorting the searched reference documents based on a result of the evaluating for an order of preference.

Alternatively, the method may further include: after the screening key information obtained by the parsing to extract search words from the key information, sorting the search words based on distances between positions of the search words in the target document and a position of a character being input currently by the user or based on weight values of the search words in the target document; wherein said performing a search based on the search words may include: performing the search based on an order of the sorted search words.

Alternatively, the method may include: performing a semantic analysis on the target document to obtain a subject attribute of the target document; wherein the method further comprises, after obtaining the reference documents similar to the target document, sorting the reference documents based on the subject attribute to preferentially display the reference documents that are highly matched with the subject attribute.

Alternatively, displaying the reference documents may include: displaying the reference documents in the same display window as the target document, or displaying the reference documents in a different display window from the target document.

Alternatively, displaying the reference documents in the same display window as the target document may include: displaying the reference documents and the target document in columns, with the reference documents positioned at either side of the display window; or displaying the reference documents to overlay the target document in a float window form.

According to a second aspect of the present disclosure, a device for recommendation of reference documents is provided, including: an obtaining module configured to obtain content information of a target document being operated by a user; a parsing module configured to parse the content information according to a preset parsing rule; a screening module configured to screen key information obtained by the parsing to extract search words from the key information; a search module configured to perform a search based on the search words to obtain reference documents including the search words; and a display module configured to display the reference documents.

Alternatively, the preset parsing rule may include a flag content extraction rule and a segmenting rule, and the parsing module may include: an extraction sub-module configured to extract flag content in the content information according to the flag content extraction rule, wherein the flag content may include at least one of a title of the target document and a key word specified in the target document; and a processing sub-module configured to segment the content information in which the extraction sub-module has extracted the flag content according to the segmenting rule to obtain respective segmented word-segments.

Alternatively, the key information may include the flag content and the word-segments, and the screening module may include: a deleting sub-module configured to delete unrelated words from the word-segments, wherein the unrelated words comprise one or more of conjunction, single-character word and pronoun; a sorting sub-module configured to sort by appearances the respective word-segments remained after the deleting by the deleting sub-module; a selection sub-module configured to select a number of the word-segments in a descending order of the appearances, the number satisfying a preset threshold; and a duplicate removal sub-module configured to remove, from the word-segments selected by the selection sub-module, those identical to the flag content to obtain screened word-segments, the screened word-segments and the flag content forming the search words.

Alternatively, the search module may include: an import sub-module configured to import the search words into a search base; a first search sub-module configured to search the search words imported by the import sub-module to obtain the reference documents including the search words; wherein the search base comprises one or more of local storage medium, cloud storage device preset by a user, and public search engine resource.

Alternatively, the device may further include: an evaluation module configured to evaluate the documents obtained through the search based on a preset evaluation rule which comprises one or more of factor of cited times, rate of positive opinions and quality level of document; wherein the search module may include: a sorting sub-module configured to sort the searched reference documents based on a result of the evaluation for an order of preference.

Alternatively, the device may further include: a first sorting module configured to sort the search words based on distances between positions of the search words in the target document and a position of a character being input currently by the user or based on weight values of the search words in the target document, wherein the search module may include: a second search sub-module configured to perform the search based on an order of the search words sorted by the first sorting module.

Alternatively, the device may further include: a first sorting module configured to sort the search words based on distances between positions of the search words in the target document and a position of a character being input currently by the user or based on weight values of the search words in the target document, wherein the search module may include: a second search sub-module configured to perform the search based on an order of the search words sorted by the first sorting module.

Alternatively, the display module may include: a second display sub-module configured to display the reference documents in the same display window as the target document; and a third display sub-module configured to display the reference documents in a different display window from the target document.

Alternatively, the second display sub-module may include: a column display sub-module configured to display the reference documents and the target document in columns, with the reference documents positioned at either side of the display window; and a float window display sub-module configured to display the reference documents to overlay the target document in a float window form.

According to a third aspect of the present disclosure, an apparatus for recommendation of reference documents is provided, including: a processor; a memory for storing instructions executable by the processor; wherein the processor is configured to: obtain content information of a target document being operated by a user, parse the content information according to a preset parsing rule, screen key information obtained by the parsing to extract search words from the key information, perform a search based on the search words to obtain reference documents including the search words, and display the reference documents.

The method and device provided in the disclosure may include the following beneficial effects.

In one embodiment, content information of a target document that is being operated by a user is obtained, the content information is parsed according to a preset parsing rule, key information obtained by the parsing is screened to extract search words from the key information, search is performed based on the search words to obtain reference documents including the search words and the reference documents are displayed. Real-time search service on key words can be achieved following the user's drafting document to provide reference documents with high matching degree and high accuracy to satisfy the user's requirements and improve the user's experience.

In an exemplary embodiment, flag content in the content information is extracted according to the flag content extraction rule, wherein the flag content may include at least one of a title of the target document and a key word specified in the target document, and the content information to which the extraction of the flag content has been performed is segmented according to the segmenting rule to obtain respective segmented word-segments. This procedure is useful to accurately determine the key word to search subsequently such that the searched reference documents are highly relevant to the target document in order to satisfy the requirements of the user.

In an exemplary embodiment, unrelated words are deleted from the word-segments, wherein the unrelated words may include one or more of conjunction, single-character word and pronoun, the respective word-segments remained after the deleting is sorted by appearances, a number of the word-segments in a descending order of the appearances, the number satisfying a preset threshold, and removing from the selected word-segments those identical to the flag content to obtain screened word-segments, the screened word-segments and the flag content forming the search words. The search words screened by the above procedure are concise, accurate and useful to search for the reference documents that are highly relevant with the target document.

In an exemplary embodiment, the search words are imported into a search base for search to obtain the reference documents including the search words, wherein the search base may include one or more of local storage medium, cloud storage device preset by a user, and public search engine resource. The embodiment provides a variety of search bases such that the range for search is flexible, comprehensive and useful to search for the reference documents that are highly relevant with the target document.

In an exemplary embodiment, the documents obtained through the search is evaluated based on a preset evaluation rule which comprises one or more of factor of cited times, rate of positive opinions, and quality level of document. The searched reference documents are sorted based on a result of the evaluating for an order of preference. The quality of the reference documents is improved to provide the user with most useful reference documents to facilitate the user's reference and improve the user's experience.

In an exemplary embodiment, the search words are sorted based on distances between positions of the search words in the target document and a position of a character being input currently by the user or based on weight values of the search words in the target document, and the search is performed based on an order of the sorted search words. The search word that is best for user's requirement currently can be positioned preferentially, thereby the user's experience is improved.

In an exemplary embodiment, a semantic analysis is performed on the target document to obtain a subject attribute of the target document, and the reference documents are sorted based on the subject attribute to preferentially display the reference documents that are highly matched with the subject attribute. The user is provided with the reference documents that are better matching, more superior in quality and closer to the user's requirement.

In an exemplary embodiment, the reference documents are displayed in the same display window as the target document or the reference documents are displayed in a different display window from the target document. Diverse and flexible display manner is provided to facilitate the user to review the reference documents and compare the reference documents with the target document.

In an exemplary embodiment, the reference documents and the target document are displayed in columns, with the reference documents positioned at either side of the display window; or the reference documents are displayed to overlay the target document in a float window form. Diverse and flexible display manner is provided to facilitate the user to review the reference documents and compare the reference documents with the target document.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart illustrating a method for recommendation of reference documents according to an exemplary embodiment.
Fig. 2 is a flow chart illustrating a method for recommendation of reference documents according to another exemplary embodiment.
Fig. 3 is a flow chart illustrating a method for recommendation of reference documents according to another exemplary embodiment.
Fig. 4 is a block diagram illustrating a device for recommendation of reference documents according to an exemplary embodiment.
Fig. 5 is a block diagram illustrating a device for recommendation of reference documents according to another exemplary embodiment.
Fig. 6 is a block diagram illustrating an apparatus 600 for recommendation of reference documents according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the disclosure. Instead, they are merely examples of apparatuses and methods consistent with aspects related to the disclosure as recited in the appended claims.

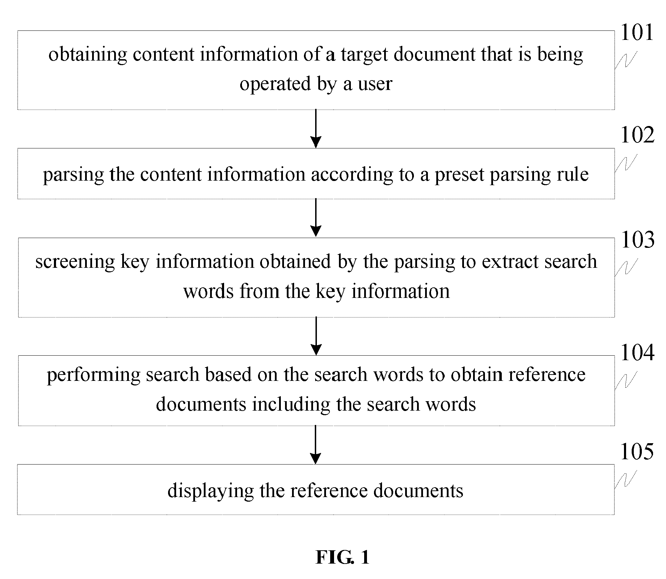

Fig. 1 is a flow chart illustrating a method for recommendation of reference documents according to an exemplary embodiment. As shown in Fig. 1, the method for recommendation of reference documents will be illustrated in the context of being applied into a terminal (a client device) in the embodiment. The method in the embodiment may include the following steps.

In step 101, content information of a target document that is being operated by a user is obtained.

The method for recommendation of reference documents may be applied into a terminal (a client device), such as a computer, a mobile terminal device (e.g. an IPAD, a telephone and the like). The terminal is installed with office processing software to input text. The method for recommendation of reference documents may be applied in the terminal via an application (APP) installed in the terminal or as a plug-in of office software. The target document may refer to a document that is being operated by the user, for example the document to which the user is entering characters or performing an amendment. The manner to obtain may include obtaining content information of the target document at a preset time interval or a preset space distance. For example, when the user is drafting a paper using the Word software, a finished part of the content of the target document may be obtained at a preset time interval, e.g. every 5 minutes. Alternatively, it may be obtained every certain space distance; for example, when the user just finished a paragraph and begins a new paragraph, the content of the target document before the new paragraph may be obtained. The value of the preset time interval and space distance for obtaining the content information may be set by the application software or the plug-in performing the method for recommendation of reference documents, or by the user according to self-demand.

In step 102, the content information is parsed according to a preset parsing rule.

In order to recommend documents similar to the document being operated by the user, key information or a subject included in the content information of the target document that has been obtained is required. The key information or the subject may be obtained by analyzing the content information according to certain algorithms and rules. The parsing rule may be implemented by those skilled in the art based on algorithms of, for example, semantic analysis, linguistic processing technique, key word extraction and the like, which are not specifically limited in the embodiment.

In step 103, key information obtained by the parsing is screened to extract search words from the key information.

The key information obtained through the parsing may be further processed. For example, repetitious information may be removed through comparison; information that is closest to or highly matched with the subject of the target document may be selected. The key information obtained through screening that is highly matched with the target document may serve as the search words. With the screening, the search words can be reduced and search can be accelerated. Reducing the search words may limit the number of the searched reference documents to facilitate the user's review and reference.

In step 104, search is performed based on the search words to obtain reference documents including the search words.

The search words after the analysis may be imported into a public search engine, such as Google Scholar, Baidu Search and the like, to search for associated documents, and may also be imported into a contract cloud server for document search. The contract cloud server may be a search database of a contract provider providing an application (APP) software of the method for recommendation of reference documents, such as an electronic database of a library, an electronic resource library in a university and the like, so that the user can obtain more authoritative and valuable reference material.

In step 105, the reference documents are displayed.

The reference documents may be displayed in a manner of being inserted in the same screen and displayed at a side of the target document that is being operated by the user, and being displayed in a manner of rolling display or float-window display so that the user can view the searched reference documents conveniently. Alternatively, the reference documents may be displayed in a new window. The manner to display may be set by the system, or by the user based on his/her habits.

In summary, in the method for recommendation of reference documents provided in the embodiment, content information of a target document that is being operated by a user is obtained, the content information is parsed according to a preset parsing rule, key information obtained by the parsing is screened to extract search words from the key information, search is performed based on the search words to obtain reference documents including the search words and the reference documents are displayed. Real-time search service on key words can be achieved following the user's drafting document to provide reference documents with high matching degree and high accuracy to satisfy the user's requirements and improve the user's experience.

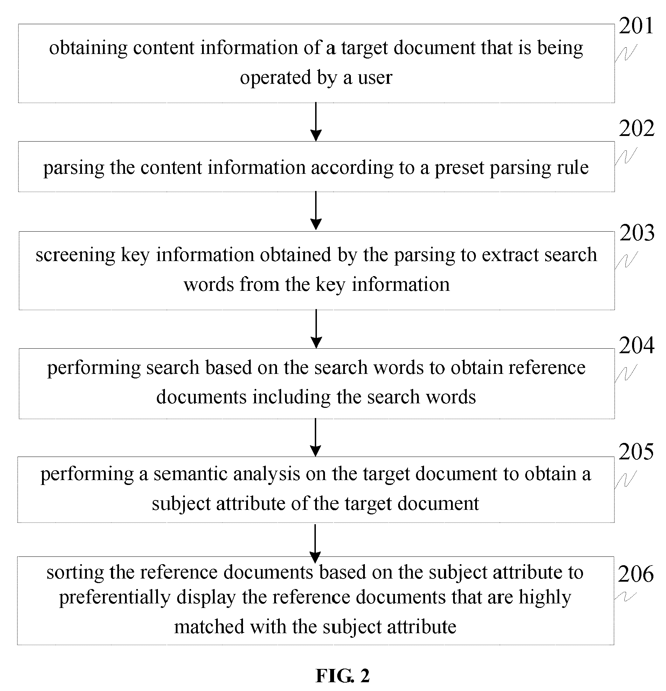

Fig. 2 is a flow chart illustrating a method for recommendation of reference documents according to another exemplary embodiment. As shown in Fig. 2, the method for recommendation of reference documents will be illustrated in the context of being applied into a terminal (a client device) in the embodiment. The embodiment shown in Fig. 2 may be implemented in many combinations in which only one will be illustrated below. Based on the above embodiment, the method in this embodiment may include the following steps.

In step 201, content information of a target document that is being operated by a user is obtained.

The manner to obtain may space preset time or space distance to obtain the content information of a target document that is being operated by the user. The space distance may include the number of words, the number of rows, the number of paragraphs, or the number of pages. The content information may include the content from the first word of the target document to the current word being input currently or the content from the last word of the content obtained last time to the current word being input currently. As described above, for the paper that is being drafted or amended by the user, the content information is obtained every preset time interval or preset space distance. The space distance may space certain number of words, number of rows, number of paragraphs, number of pages and the like, in this case, the obtaining of the content information of the target document may be all the content information for the content before the current character that is being input by the user, that is, the content from the first word of the target document to the current word that is being input currently, or the text between two time intervals or space distance intervals, that is, from the last word of the content obtained last time to the current word that is being input currently.

In step 202, the content information is parsed according to a preset parsing rule.

The preset parsing rule may include a flag content extraction rule and a segmenting rule. The flag content extraction rule may include the type of the extracted flag content, such as a title of the target document, titles of respective chapters, words marked in bold or by underlines, key words specified in the document and the like. The segmenting rule may employ a word-segment algorithm based on natural language processing (simply referred as "NLP") techniques.

Accordingly, step 202 may include: extracting flag content in the content information according to the flag content extraction rule, wherein the flag content may include at least one of a title of the target document and a key word specified in the target document, for example, the key word specified by the author in the paper, the title of respective chapters and the like, and segmenting the content information to which the extraction of the flag content has been performed according to the segmenting rule to obtain respective segmented word-segments.

Segmenting with the segmenting rule enable the segmented word-segments to conform to natural language. The words are coherent and the definition of the boundary of characters and words employs a best combination that enable the context to be most smooth and inerrant in grammar. Meanwhile, since there may be more than one meaning for many words, the explanation that enables the segmented word-segments to make the meaning of a sentence most smooth is required.

In step 203, key information obtained by the parsing is screened to extract search words from the key information.

The key information may include the flag content and the word-segments. Accordingly, step 203 may include: deleting unrelated words from respective word-segments, wherein the unrelated words may include one or more of conjunction, single-character words and pronoun; sorting the respective word-segments remained after the deleting by appearances; and selecting a number of the word-segments in a descending order of the appearances, the number satisfying a preset threshold, and removing from the selected word-segments those identical to the flag content to obtain screened word-segments, the screened word-segments and the flag content forming the search words.

The respective segmented word-segments may be screened, and unrelated words, such as "and", "meanwhile", "you, I, he/she", and single-character word-segments units with unrecognized meaning and so on may be removed. Sorting then may be performed based on appearances of the word-segments. Since the words that are mentioned by the author repeatedly often are closely associated with the subject of the target document, the search words with high accuracy may be positioned through sorting based on appearances. For the selected word-segments that present repeatedly with high appearances, there will be the word-segments that are identical to the flag content therein. The word-segments identical to the flag content may be deleted by comparing with the flag content to obtain the screened word-segments. The screened word-segments and the flag content jointly form the search words. Repetitious search words may be removed through screening, such that the number of the search words can be reduced and the search procedure can be accelerated.

In step 204, search is performed based on the search words to obtain reference documents including the search words.

Specifically, the search words are imported into a search base to search for the reference documents including the search words, wherein the search base may include one or more of local storage medium, cloud storage device preset by a user and public search engine resource. The local storage medium refers to a medium unit in which the target document being operated by the user is located, for example, the documents in a local hard disk of the user's computer. The content focused on and drafted by the user is usually related a topic with certain relevance and consistence. History documents on this topic written by the user previously may be found by searching the local storage medium. Regarding the cloud storage device preset by a user and the public search engine, the illustration of the last embodiment may be made reference to and it will not be repeated herein.

Alternatively, the method for recommendation of reference documents may further include: performing a semantic analysis on the target document to obtain a subject attribute of the target document in step 205, and sorting the reference documents based on the subject attribute to preferentially display the reference documents that are highly matched with the subject attribute in step 206.

The semantic analysis may employ an artificial intelligence neural network technique or semantic analysis technique and the like to generalize or extract the subject of the target document, to obtain the topic to which the target document belongs such as the field of picture processing, the field of Internet of Things communication and the like. The determination of the subject attribute may also be combined with the previous search words, for example, if most of the search words belong to the words that appear frequently in the field of Internet of Things communication, the field that the subject of the target document belongs to may be defined based on the analysis of the search words, thus the field of the target document may be obtained through the above method.

In summary, in the method for recommendation of reference documents provided in the embodiment, content information of a target document is obtained in a flexible manner of a time interval or space distance interval. As a result, not only fine search is achieved for a small part of the content information, but also fast search of the key information is achieved for massive content information. Real-time search service is provided following the user's drafting document. The flag content in the content information is extracted, the content information is segmented, the unrelated words is deleted from respective segmented word-segments, sorting is performed by appearances and so on. As a result, simple and highly accurate search words may be obtained. Moreover, a variety of search bases are provided such that the range for search is flexible and comprehensive, which is useful to search for the reference documents that are highly relevant with the target document, thus the user's requirement is satisfied and the user's experience is improved.

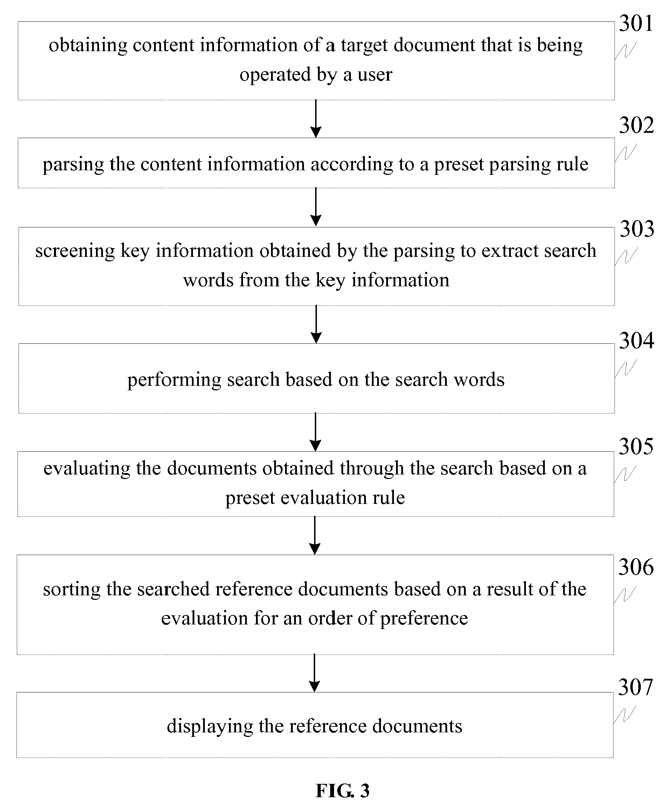

Fig. 3 is a flow chart illustrating a method for recommendation of reference documents according to another exemplary embodiment. As shown in Fig. 3, the method for recommendation of reference documents will be illustrated in the context of being applied into a terminal (a client device) in the embodiment. Based on the above embodiment, the method in this embodiment may include the following steps.

In step 301, content information of a target document that is being operated by a user is obtained.

In step 302, the content information is parsed according to a preset parsing rule.

In step 303, key information obtained by the parsing is screened to extract search words from the key information.

In step 304, search is performed based on the search words.

In step 305, the documents obtained through the search are evaluated based on a preset evaluation rule.

The preset evaluation rule may include one or more of factor of cited times, rate of positive opinions, and quality level of document.

For example, many public search engines will mark, below the document, the cited times of a searched document, i.e., information on the factor of cited times. The evaluation rule may include evaluation score after a user's viewing, i.e., information on the rate of positive opinions, and information to evaluate the quality level of a document such as, whether the document can be opened or not, whether the document can only be obtained with a password or not, whether the content is complete or not, whether there is any gibberish in the content or not, and the like. The quality of the reference documents is improved through above evaluation for the searched documents, such that the user may obtain most useful reference documents to facilitate user's reference, to save the user's time and to improve the user's experience.

In step 306, the searched reference documents are sorted based on a result of the evaluation for an order of preference.

The searched reference documents are sorted based on a result of the evaluation for an order of preference, the reference documents with high value and good quality may thus be displayed preferentially.

In step 307, the reference documents are displayed.

The process of evaluation enable the reference documents displayed to the user to be the documents that has been sorted for the searched documents based on a result of the evaluation for an order of preference.

Further, in step 303, screening key information obtained by the parsing to extract search words from the key information may include: sorting the search words based on distances between positions of the search words in the target document and a position of a character being input currently by the user or based on weight values of the search words in the target document. Accordingly, in step 304, performing a search based on the search words may include: performing the search based on an order of the sorted search words. For example, if respective chapters in the target document focus on different subjects, a search is performed preferentially according to the search words close to the current character being input by the user, such that the reference documents that conform to the target that is focused by the user currently can be obtained.

The determination of the weight values may be based on TF-IDF technique to parse the degree of importance of the search words in the target document to obtain the weight values of the degree of importance of the search words.

TF-IDF technique is a statistical method to evaluate the degree of importance of a word with respect to a document of a file set or a corpus. The possibility to obtain the search words with high value can be improved by selecting the search words with the weight values of the degree of importance.

Further, in step 307, displaying the reference documents may include: displaying the reference documents in the same display window as the target document or displaying the reference documents in a different display window from the target document.

Further, displaying the reference documents in the same display window as the target document may include: displaying the reference documents and the target document in columns, with the reference documents positioned at either side of the display window; or displaying the reference documents to overlay the target document in a float window form. The above diverse and flexible display manners may facilitate the user's reviewing the reference documents and the user's comparing the reference documents with the target document.

Device embodiments of the disclosure are illustrated below to perform the method embodiments of the disclosure which will be made reference to with respect to the details undisclosed in the device embodiments of the disclosure.

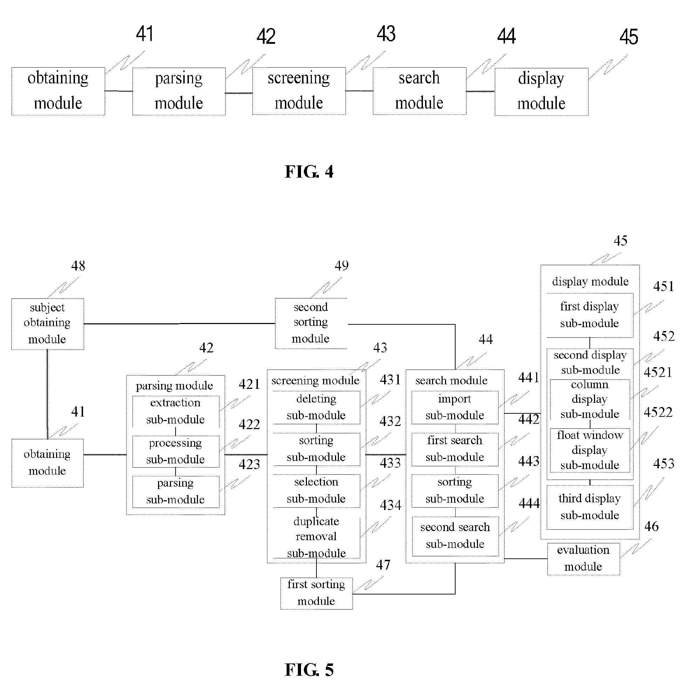

Fig. 4 is a block diagram illustrating a device for recommendation of reference documents according to an exemplary embodiment. The device for recommendation of reference documents may be implemented as part or all of an electronic device through software, hardware of a combination thereof. The device for recommendation of reference documents may include: an obtaining module 41 configured to obtain content information of a target document being operated by a user; a parsing module 42 configured to parse the content information according to a preset parsing rule; a screening module 43 configured to screen key information obtained by the parsing to extract search words from the key information; a search module 44 configured to perform a search based on the search words to obtain reference documents including the search words; and a display module 45 configured to display the reference documents.

In summary, in the device for recommendation of reference documents provided in the embodiment, content information of a target document that is being operated by a user is obtained, the content information is parsed according to a preset parsing rule, key information obtained by the parsing is screened to extract search words from the key information, search is performed based on the search words to obtain reference documents including the search words and the reference documents are displayed. Real-time search service on key words can be achieved following the user's drafting document to provide reference documents with high matching degree and high accuracy to satisfy the user's requirements and improve the user's experience.

Fig. 5 is a block diagram illustrating a device for recommendation of reference documents according to another exemplary embodiment. The device for recommendation of reference documents may be implemented as part or all of an electronic device through software, hardware of a combination thereof.

Based on the above embodiment, optionally, the preset parsing rule may include a flag content extraction rule and a segmenting rule. Accordingly the parsing module 42 may include: an extraction sub-module 421 configured to extract flag content in the content information according to the flag content extraction rule, wherein the flag content may include at least one of title of the target document and a key word specified in the target document; and a processing sub-module 422 configured to segment the content information in which the extraction sub-module has extracted the flag content according to the segmenting rule to obtain respective segmented word-segments.

Optionally, the key information may include the flag content and the word-segments. Accordingly, the screening module 43 may include: a deleting sub-module 431 configured to delete unrelated words from the word-segments, wherein the unrelated words may include one or more of conjunction, single-character word and pronoun; a sorting sub-module 432 configured to sort by appearances the respective word-segments remained after the deleting by the deleting sub-module 431; a selection sub-module 433 configured to select a number of the word-segments in a descending order of the appearances, the number satisfying a preset threshold; and a duplicate removal sub-module 434 configured to remove, from word-segments selected by the selection sub-module 433, those identical to the flag content to obtain screened word-segments, the screened word-segments and the flag content forming the search words.

Optionally, the search module 44 may include: an import sub-module 441 configured to import the search words into a search base; a first search sub-module 442 configured to search the search words imported by the import sub-module to obtain the reference documents including the search words, wherein the search base may include one or more of local storage medium, cloud storage device preset by a user, and public search engine resource.

Optionally, the device may further include: an evaluation module 46 configured to evaluate the documents obtained through the search based on a preset evaluation rule which may include one or more of factor of cited times, rate of positive opinions and quality level of document. Accordingly, the search module 44 may include a sorting sub-module 443 configured to sort the searched reference documents based on a result of the evaluation for an order of preference.

Optionally, the device may further include: a first sorting module 47 configured to sort the search words based on distances between positions of the search words in the target document and a position of a character being input currently by the user or based on weight values of the search words in the target document. The search module 44 may include: a second search sub-module 444 configured to perform the search based on priority an order of the search words sorted by the first sorting module 47.

Optionally, the device may further include: a subject obtaining module 48 configured to perform a semantic analysis on the target document to obtain a subject attribute of the target document; and a second sorting module 49 configured to sort the reference documents based on the subject attribute obtained by the subject obtaining module 48. The display module 45 may include a first display sub-module 451 configured to preferentially display the reference documents that are highly matched with the subject attribute.

Optionally, the display module 45 may include: a second display sub-module 452 configured to display the reference documents in the same display window as the target document; and a third display sub-module 453 configured to display the reference documents in a different display window from the target document.

Optionally, the second display sub-module 452 may include: a column display sub-module 4521 configured to display the reference documents and the target document in columns, with the reference documents positioned at either side of the display window; and a float window display sub-module 4522 configured to display the reference documents to overlay the target document in a float window form.

In the device of the above embodiments, the specific manner to perform operations of respective modules has been described in details in the related method embodiments and it will not be illustrated in details herein.

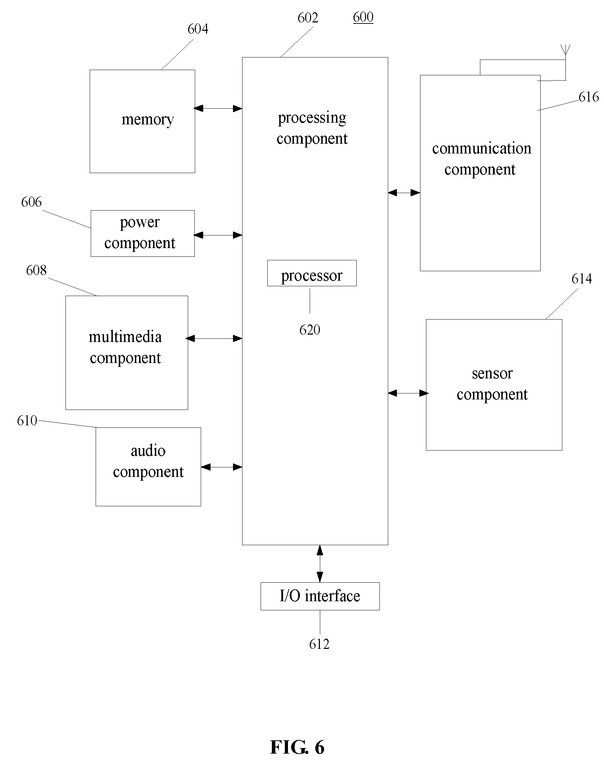

Fig. 6 is a block diagram illustrating an apparatus 600 for recommendation of reference documents according to an exemplary embodiment. For example, the apparatus 600 for recommendation of reference documents may be a mobile phone, a computer, a digital broadcast terminal, a messaging device, a gaming console, a tablet, a medical device, exercise equipment, a personal digital assistant, a router, a coordinator and the like.

Referring to Fig. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power for the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the apparatus 600 is in an operation mode, such as a photographing mode or a video mode. Each of the front camera and the rear camera may be a fixed optical lens system or have optical focusing and zooming capability.

The audio component 610 is configured to output and/or input audio signals. For example, the audio component 610 includes a microphone ("MIC") configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, the peripheral interface modules being, for example, a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For instance, the sensor component 614 may detect an open/closed status of the apparatus 600, relative positioning of components (e.g., the display and the keypad, of the apparatus 600), a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of a nearby object without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as WiFi, 2G, or 3G, or a combination thereof. In an exemplary embodiment, the communication component 616 receives a broadcast signal or broadcast associated information from an external broadcast management system via a broadcast channel. In an exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the apparatus 600, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having instructions stored therein that, when executed by a processor of a mobile terminal, cause the mobile terminal to perform a method for recommendation of reference documents, including a memory 604 for storing processor-executable instructions, a processor 620 configured to: obtain content information of a target document being operated by a user, parse the content information according to a preset parsing rule, screen key information obtained by the parsing to extract search words from the key information, perform a search based on the search words to obtain reference documents including the search words, and display the reference documents.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for recommendation of reference documents, comprising:
obtaining (101, 201, 301) content information of a target document being operated on by a user;
parsing (102, 202, 302) the content information according to a preset parsing rule;
screening (103, 203, 303) key information obtained by the parsing to extract search words from the key information;
performing (104, 204, 304) a search based on the search words to obtain reference documents including the search words; and
displaying (105, 206, 307) the reference documents.

2. The method of claim 1, wherein the preset parsing rule comprises a flag content extraction rule and a segmenting rule, and said parsing the content information according to the preset parsing rule comprises:
extracting flag content in the content information according to the flag content extraction rule, wherein the flag content comprises at least one of a title of the target document and a key word specified in the target document; and
segmenting the content information to which the extraction of the flag content has been performed according to the segmenting rule to obtain respective segmented word-segments.

3. The method of claim 2, wherein the key information comprises the flag content and the word-segments, and said screening key information obtained by the parsing to extract search words from the key information comprises:
deleting unrelated words from the respective word-segments, wherein the unrelated words comprise one or more of conjunction, single-character word and pronoun;
sorting the respective word-segments remained after the deleting by appearances; and
selecting a number of the word-segments in a descending order of the appearances, the number satisfying a preset threshold, and removing from the selected word-segments those identical to the flag content to obtain screened word-segments, the screened word-segments and the flag content forming the search words.

4. The method of any preceding claim, wherein said performing a search based on the search words to obtain reference documents including the search words comprises:
importing the search words into a search base for search to obtain the reference documents including the search words, wherein the search base comprises one or more of local storage medium, cloud storage device preset by a user, and public search engine resource.

5. The method of any preceding claim, further comprising, after said performing a search based on the search words,
evaluating (305) the documents obtained through the search based on a preset evaluation rule which comprises one or more of factor of cited times, rate of positive opinions, and quality level of document;
wherein said obtaining the reference documents including the search words comprises:
sorting (306) the searched reference documents based on a result of the evaluating for an order of preference.

6. The method of any preceding claim, further comprising, after said screening key information obtained by the parsing to extract search words from the key information,
sorting the search words based on distances between positions of the search words in the target document and a position of a character being input currently by the user or based on weight values of the search words in the target document;
wherein said performing a search based on the search words comprises: performing the search based on an order of the sorted search words.

7. The method of claim 1, further comprising:
performing (205) a semantic analysis on the target document to obtain a subject attribute of the target document;
wherein the method further comprises, after obtaining the reference documents similar to the target document,
sorting (206) the reference documents based on the subject attribute to preferentially display the reference documents that are highly matched with the subject attribute.

8. The method of any preceding claim , wherein said displaying the reference documents comprises: displaying the reference documents in the same display window as the target document, or displaying the reference documents in a different display window from the target document.

9. The method of claim 8, wherein said displaying the reference documents in the same display window as the target document comprises: displaying the reference documents and the target document in columns, with the reference documents positioned at either side of the display window; or displaying the reference documents to overlay the target document in a float window form.

10. A device for recommendation of reference documents, **characterized in** comprising:
an obtaining module (41) configured to obtain content information of a target document being operated by a user;
a parsing module (42) configured to parse the content information according to a preset parsing rule;
a screening module (43) configured to screen key information obtained by the parsing to extract search words from the key information;
a search module (44) configured to perform a search based on the search words to obtain reference documents including the search words; and
a display module (45) configured to display the reference documents.

11. The device of claim 10, wherein the preset parsing rule comprises a flag content extraction rule and a segmenting rule, and the parsing module (42) comprises:
an extraction sub-module (421) configured to extract flag content in the content information according to the flag content extraction rule, wherein the flag content may include at least one of a title of the target document and a key word specified in the target document; and
a processing sub-module (422) configured to segment the content information in which the extraction sub-module (421) has extracted the flag content according to the segmenting rule to obtain respective segmented word-segments;
wherein the key information comprises the flag content and the word-segments, and the screening module (43) comprises:
a deleting sub-module (431) configured to delete unrelated words from the word-segments, wherein the unrelated words comprise one or more of conjunction, single-character word and pronoun;
a sorting sub-module (432) configured to sort by appearances the respective word-segments remained after the deleting by the deleting sub-module (431);
a selection sub-module (433) configured to select a number of the word-segments in a descending order of the appearances, the number satisfying a preset threshold; and
a duplicate removal sub-module (434) configured to remove, from the word-segments selected by the selection sub-module (433), those identical to the flag content to obtain screened word-segments, the screened word-segments and the flag content forming the search words.

12. The device of claim 10 or 11, wherein the search module (44) comprises:
an import sub-module (441) configured to import the search words into a search base;
a first search sub-module (442) configured to search the search words imported by the import sub-module (441) to obtain the reference documents including the search words;
wherein the search base comprises one or more of local storage medium, cloud storage device preset by a user, and public search engine resource.

13. The device of any of claims 10, 11 or 12, further comprising:
an evaluation module (46) configured to evaluate the documents obtained through the search based on a preset evaluation rule which comprises one or more of factor of cited times, rate of positive opinions and quality level of document;
wherein the search module (44) comprises:
a sorting sub-module (443) configured to sort the searched reference documents based on a result of the evaluation for an order of preference.

14. The device of any of claims 10 to 13, further comprising:
a first sorting module (47) configured to sort the search words based on distances between positions of the search words in the target document and a position of a character being input currently by the user or based on weight values of the search words in the target document,
wherein the search module (44) comprises: a second search sub-module (444) configured to perform the search based on an order of the search words sorted by the first sorting module (47).

15. The device of any of claims 10 to 14, further comprising:
a subject obtaining module (48) configured to perform a semantic analysis on the target document to obtain a subject attribute of the target document; and
a second sorting module (49) configured to sort the reference documents based on the subject attribute obtained by the subject obtaining module (48);
wherein the display module (45) comprises:
a first display sub-module (451) configured to preferentially display the reference documents that are highly matched with the subject attribute; or
a second display sub-module (452) configured to display the reference documents in the same display window as the target document; and
a third display sub-module (453) configured to display the reference documents in a different display window from the target document;
wherein the second display sub-module (452) comprises:
a column display sub-module (4521) configured to display the reference documents and the target document in columns, with the reference documents positioned at either side of the display window; and
a float window display sub-module (4522) configured to display the reference documents to overlay the target document in a float window form.
